# EUROPÄISCHE PATENTANMELDUNG

(11) **EP 2 784 182 A1**
(43) Veröffentlichungstag der Anmeldung: **01.10.2014**
(21) Anmeldenummer: 13161755.7
(22) Anmeldetag: 28.03.2013
(51) Int. Cl.: C23C 18/44, C23C 18/30, B01J 13/00

(54) **Ein Palladium-Abscheidungsbad und dessen Verwendung zur hochkontrollierten stromfreien Palladium-Abscheidung auf nanopartikulären Strukturen**

(71) Anmelder: Technische Universität Darmstadt, 64285 Darmstadt (DE)
(72) Erfinder: Ensinger, Wolfgang, 64839 Münster (DE); Münch, Falk, 64293 Darmstadt (DE)
(74) Vertreter: Stumpf, Peter

(57) **Zusammenfassung**

Mit der vorliegenden Erfindung wird ein Palladium- Abscheidungsbad sowie ein Verfahren zur hochkontrollierten stromfreien Palladium-Abscheidung und dessen Herstellung vorgestellt, mit dem auch katalytisch inaktive und nanopartikuläre Substrate stromlos und mit einfacher Handhabung beschichtet werden können. Gegenüber dem Stand der Technik stellt diese Erfindung eine signifikante Verbesserung der Qualität der Metallbeschichtung hinsichtlich ihrer Homogenität und Reinheit auf nanopartikulären Substraten dar.

## Beschreibung

Die vorliegende Erfindung betrifft eine Badzusammensetzung und ein Verfahren zur stromfreien Palladium-Beschichtung von nanopartikulären Substraten, deren Oberflächenchemie katalytisch inaktiv oder katalytisch aktiv sein kann. Weiterhin betrifft die vorliegende Erfindung Palladium-Partikel, die nach dem erfindungsgemäßen Verfahren hergestellt werden sowie deren Verwendung.

**Beschreibung und Einleitung des allgemeinen Gebietes der Erfindung** Die vorliegende Erfindung betrifft das Gebiet der Elektrochemie und Materialwissenschaften.

### Stand der Technik

Stromfreie Metall-Abscheidungen stellen oberflächenselektive nasschemische Redoxreaktionen dar, die zu einem autokatalysierten Metallfilmwachstum führen. Stromfreie Abscheidungsbäder bestehen mindestens aus einer Oxidationskomponente (Metallsalz) und einem Reduktionsmittel, die zusammen ein metastabiles Paar bilden. Die Reduktion des Metallsalzes zum elementaren Metall ist zwar die energetische Senke des Systems, allerdings muss diese Reaktion kinetisch gehemmt sein. Wird nun ein katalytisch aktives Substrat in das Abscheidungsbad gegeben, wird die Aktivierungsbarriere der Redoxreaktion auf dessen Oberfläche durch heterogene Katalyse gesenkt. Durch die an der Grenzfläche ablaufende Reaktion entsteht ein Metallfilm, der die Abscheidung durch Autokatalyse kontinuierlich vorantreibt. In der Summe wird bei gegebener Synthesequalität ein Werkstück durch einfaches Eintauchen in eine Reaktionslösung mit einem gleichmäßigen Metallfilm überzogen.
Die Methode ist aufgrund ihrer einfachen Handhabung, ihrer guten Skalierbarkeit, der Erzielbarkeit hochwertiger Metallfilme und der hohen Substratflexibilität vielseitig einsetzbar.

So können theoretisch beliebig geformte Werkstücke aus frei wählbaren Materialien eingesetzt werden, im Gegensatz zu elektrochemischen Metallisierungen muss das Substrat nicht leitfähig sein. Die Bedingung initialer katalytischer Aktivität kann durch Vorbehandlungsschritte auch z.B. auf Polymeren realisiert werden. Diese Vorteile haben zur technischen Implementierung der stromfreien Metallabscheidung in vielen Bereichen geführt (Rao C. R. K., Trivedi D. C., Coord. Chem. Rev. 249, 2005). So werden stromfreie Metallabscheidungen eingesetzt zur Herstellung von Isolierschichten in der Elektronik, leitende Beschichtungen, Antikorrosions-Beschichtungen, Erhöhung der Oberflächenhärte, Palladium-Beschichtung auf anorganischen Membranen, reine Palladium-Beschichtungen für Wasserstoff-Abtrennungen.

Im Bereich der technisch besonders interessanten Platingruppenmetalle existieren nur relativ wenige Synthesen, die zudem häufig Probleme wie mangelnde Stabilität, Verunreinigungen oder ungenügende Abscheidungsqualität aufweisen. Aktuelle Patente auf stromfreie Palladium-Abscheidungen gehen gezielt auf diese Punkte ein. So werden beispielsweise in den Schriften Patentschriften US 7,678,183 B2 und US 7,632,343 B2 Badstabilität und Filmhomogenität als Stärken patentierter Abscheidungsprotokolle genannt. Metallisches Palladium ist neben Anwendungen im Bereich der Elektrotechnik oder der Oberflächenveredlung vor allem aufgrund seiner katalytischen Eigenschaften gefragt. Es zeigt eine hohe Affinität zu Wasserstoff, die sich u.a. in der Bildung nichtstöchiometrischer Hydride äußert. Diese Reaktivität begründet den häufigen Einsatz von Palladium in Hydrierreaktionen, in der Wasserstoff-Aufreinigung oder -Sensorik. Weitere bedeutsame katalytische Anwendungsfelder sind C-C-Kreuzkupplungen oder Brennstoffzellen-Reaktionen. Aus Gründen der Kostenersparnis, Miniaturisierung oder verbesserten Reaktivität sind Palladium-Nanomaterialien dabei von besonderem Interesse.

### Probleme im Stand der Technik

Während für dickere Palladium-Filme einige zuverlässige Abscheidungsbäder zur Verfügung stehen, existieren bei der stromfreien Herstellung von Nanomaterialien deutliche Defizite. Im Stand der Technik gibt es folgende Mängel bei der Metallbeschichtung von nanofilligranen, komplexen und katalytisch nicht aktiven Substraten:
**Ungleichmäßige Beschichtung von nanofiligranen Oberflächen** Nanostrukturierte Oberflächen können nur gleichmäßig metallisiert werden, wenn die Metall-Partikelgröße die Substratrauigkeit merklich unterschreitet. Daher ist es für nanotechnologische Anwendungen in hohem Maße relevant, kleine Partikelgrößen in einer engen Größenverteilung zu erzielen. Kleine Partikel sind zudem aufgrund ihres hohen Oberflächen-Volumen-Verhältnisses für katalytische Anwendungen besonders interessant. Im Stand der Technik wurde bisher nur eine moderate Partikelgröße von 32 + 10 nm erreicht (Yu S. et al., Chem. Mater. 17, 2005, pp. 3445-3450)

### Ungleichmäßige Substratbedeckung von komplexen Oberflächen

Eine weitere Problematik für die stromfreie Metallabscheidung stellt die Beschichtung komplexer Oberflächen dar. So tendieren Kavitäten in Substraten zu geringeren Mengen abgeschiedenen Metalls, da die reaktiven Spezies des Abscheidungsbades durch Diffusion in die tiefer gelegenen Bereiche gelangen müssen, ohne zuvor an leichter zugänglichen Oberflächen abzureagieren. Im Stand der Technik wurde das bisher nur unbefriedigend erreicht: So sind bei stromfrei erzeugten Silber-Nanoröhren die Röhrenöffnungen bereits teilweise zugewachsen, während die Röhren im Innern des Substrats noch nicht vollständig ausgebildet sind (Muench F., et al., Nanotechnology 22, 2011, 415602 (9pp))

### Beschichtung von katalytisch nicht aktiven Substraten

Im Stand der Technik benötigen stromfreie Metallabscheidungen in aller Regel katalytisch aktive Substrate, um die Reaktion zu starten. Nichtaktive Substrate erfordern daher Vorbehandlungsschritte, die zusätzliche Arbeit verursachen und zudem nicht immer ein gleichmäßiges Schichtwachstum garantieren können. So zeigte der mittels eines Palladium-Ascorbinsäure-Abscheidungsbads erzeugte Palladium-Film in einer elektrochemisch mit Gold aktivierten porösen Kohlenstoff-Membran nur wenige 100 nm Eindringtiefe (Burckel D.B., et al., Small 5, 2009, 2792-2796)

Die Nachteile und Probleme im Stand der Technik sind somit folgende: Bisher ist eine ausreichende und gleichmäßige Metallisierung von nanostrukturierten Oberflächen noch nicht in dem Maße möglich, wie sie für nanotechnologische Anwendungen notwendig wären Aufgrund der ungleichmäßigen Substratbedeckung kommt es z .B in Kavitäten zu geringerer Beschichtung als an anderen Stellen.

### Aufgabe

Die Aufgabe der vorliegenden Erfindung ist es, die oben aufgeführten Nachteile aus dem Stand der Technik zu überwinden: Dazu soll ein Abscheidungsbad und ein Verfahren zur homogenen Palladiumbeschichtung von filigranen nanopartikulären und komplexen Substraten mit katalytisch inaktiver oder katalytisch aktiver Oberflächenchemie bereitgestellt werden. Gegenüber dem Stand der Technik soll eine signifikante Verbesserung der Homogenität der Metallschichtdicke erreicht werden. Auch Kavitäten sollen gleichmäßig beschichtet werden. Desweiteren soll ein reiner Metallfilm ohne chemische Verunreinigungen auf den Substraten erreicht werden.

### Lösung der Aufgabe

Die erfindungsgemäße Aufgabe wird durch eine Zusammensetzung eines Abscheidungsbads für eine stromfreie Palladium-Beschichtung gelöst, umfassend die folgenden Komponenten:
(1) ein wässriges Palladium-Salz;
(2) mindestens einem **Reduktionsmittel,** ausgewählt aus der Gruppe umfassend reduzierende Phosphorverbindungen, reduzierende Stickstoffverbindungen, reduzierende Borverbindungen, reduzierende aminstabilisierte Borange, reduzierende organische Verbindungen, Hypophosphite, Hydrazin, Borhydrid und Formaldehyd;
(3) mindestens einem **Komplexbildner,** ausgewählt aus der Gruppe umfassend Polyaminocarbonsäuren, Heteroaromaten, Pyridine, Beta-Diketone, Amine, Ammoniak, Chelatamine, Ethylendiamin, Carbonsäuren, Nitrit, Acac;
   dadurch gekennzeichnet, dass
(4) zusätzlich ein **Adsorbatbildner** vorhanden ist, ausgewählt aus der Gruppe umfassend Metallsalze, Übergangsmetallkomplexe, Oxoanionen, Pyridine, Heteroaromaten, Xanthogenate, adsorbierende und wasserlösliche Polymere und Beta-Diketone

Überraschend wurde gefunden, dass die Einführung eines Adsorbatbildner zum Abscheidungsbad zu einer signifikanten Verbesserung der Abscheidungshomogenität führt. Mittels einer geeigneten Badzusammensetzung umfassend die funktionellen Komponenten: Adsorbatbildner, Komplexbildner, Palladium-Quelle und Reduktionsmittel kann über stromlose Palladium-Abscheidung ein bezüglich der Schichtdicke homogener und chemisch reiner Palladium-Film auch auf nanopartikulären Substraten oder/und katalytisch nicht aktiven Substraten oder/und Substraten mit komplexer Oberflächengeometrie erreicht werden.

Ohne auf folgende Theorie festgelegt zu sein, basiert die Optimierungsstrategie der vorliegenden Erfindung auf folgender Annahme zum Abscheidungsmechanismus: Durch Einführung eines Adsorbatbildner in das Abscheidungsbad wird eine kontrollierte Senkung der Reaktionsgeschwindigkeit und gleichzeitig eine hohe Badstabilität erreicht. Auf diese Weise kann die erfindungsgemäße homogene und hochreine Metallschicht sowohl auf nanopartikulären als auch auf komplexen als auch auf katalytisch inaktiven Substraten erzielt werden.

Das erfindungsgemäße Abscheidungsbad, das Verfahren sowie die daraus erhältlichen metallbeschichteten Produkte sind nachfolgend erläutert.

Die Erfindung ist nicht auf eine der nachfolgend beschriebenen Ausführungsformen beschränkt, sondern in vielfältiger Weise abwandelbar. Sämtliche aus den Ansprüchen, der Beschreibung und den Zeichnungen hervorgehenden Merkmale und Vorteile, einschließlich konstruktiver Einzelheiten können sowohl für sich als auch in den verschiedensten Kombinationen erfindungswesentlich sein.

Der Adsorbatbildner im Sinne der vorliegenden Erfindung umfasst Stoffe, die die an der Grenzfläche Metallfilm zu Lösung stattfindende Abscheidungsreaktion verlangsamen. Ohne auf folgende Theorie festgelegt zu sein, kann der Adsorbatbildner zwei verschiedene funktionelle Rollen einnehmen und auf beide Weisen die Reaktionsgeschwindigkeit herabsetzen: Zum Einen kann dieser sich in der Rolle eines Adsorbatbildners an die Oberflächenatome des Metallfilms anlagern. Zum Anderen kann er als Komplexbildner eine Bindung zu den Metallkationen in der Lösung eingehen und diese dadurch in der Lösung stabilisieren. Auf beide Weisen kann der Adsorbatbildner die Geschwindigkeit der Abscheidungsreaktion herabsetzen. Neben einer Verlangsamung der Reaktion wirken Adsorbatbildner und Komplexbildner oft auch stabilisierend, indem diese die Keimbildung oder deren Wachstum unterdrücken.

Adsorbatbildner reduzieren die Aktivität der erhaltenen Metallfilme in der stromlosen Abscheidungsreaktion durch Wechselwirkung mit deren Oberfläche. Sie können auch gleichzeitig als Komplexbildner wirksam werden.

Als Adsorbatbildner eignen sich Metallsalze von Nickel, Eisen und Blei. Ebenfalls eignen sich Übergangsmetallkomplexe, insbesondere EisenCyanokomplexe, Oxoanionen, insbesondere Sulfit, Arsenat, Bromat und Iodat, Pyridine und andere Heteroaromaten, Xanthogenate, adsorbierende und wasserlösliche Polymere, insbesondere Polyvinylpyrrolidon. Desweiteren eignen sich Beta-Diketone als Adsorbatbildner. Ganz besonders geeignet ist 4-Dimethylaminopyridin (DMAP).

Als Adsorbatbildner können aromatische Pi-Systeme, insbesondere Heteroaromaten wie z.B. Pyrrole, Thiophene, Oxazole, Imidazole, Pyrazole, Thiazole, Chinoline und Phenantrholine eingesetzt werden. Als Adsorbatbildner besonders geeignet sind aromatische Verbindungen aus der Klasse der Pyridine, besonders bevorzugt Pyridin, 4-Cyanopyridin, Isonikotinsäure und 4-Hydroxypyridin, ganz besonders bevorzugt 4-Dimethylaminopyridin. Allgemein eignen sich annelierte Ringsysteme, die aufgrund ihres mesomeren Elektronenschubs und weiterer Donoratome analog zum 4-Dimethylaminopyridin an Metalloberflächen adsorbieren.

Ganz besonders geeignet als Adsorbatbildner sind DMAP, 4-Picolin und Methoxypyridin

Es ist günstig, wenn Adsorbatbildner und Palladium in einem molaren Verhältnis von 3:1 bis 100:1 vorliegen, bevorzugt 4:1 bis 20:1, ganz besonders geeignet ist ein Verhältnis von 8:1 bis 15:1.

Wird Methoxypyridin als Adsorbatbildner ausgewählt, so ist es günstig Methoxypyridin und Palladium in einem molaren Verhältnis von 4:1 bis 12:1 einzusetzen, bevorzugt 6:1 bis 10:1, ganz besonders geeignet ist ein Verhältnis von 8:1.

Wird 4-Picolin als Adsorbatbildner eingesetzt, so ist es günstig 4-Picolin und Palladium in einem molaren Verhältnis von 4:1 bis 12:1 einzusetzen, bevorzugt 6:1 bis 10:1, ganz besonders geeignet ist ein Verhältnis von 8:1.

Ganz besonders geeignet für die erfindungsgemäßen stromlosen Palladium-Abscheidungsbäder ist es DMAP als Adsorbatbildner einzusetzen. DMAP und Palladium sollten in einem molaren Verhältnis von 3:1 bis 100:1 vorliegen, bevorzugt in einem Verhältnis von 5:1 bis 20:1, besonders bevorzugt ist ein Verhältnis von 8:1 bis 12:1.

**Komplexbildner** im Sinne der vorliegenden Erfindung und in Übereinstimmung mit dem Lehrbuchwissen bilden Chelat -Komplexe mit Metallkationen aus der Lösung. Ohne auf folgende Theorie festgelegt zu sein, werden die Metallkationen durch die starke Bindung an die Komplexbildner in der Lösung thermodynamisch stabilisiert. Desweiteren kann davon ausgegangen werden, dass eine kinetische Stabilisierung stattfindet, da die sterisch anspruchsvollen Komplexe eine schlechtere Erreichbarkeit für Reduktionsprozesse besitzen. Auf diese Weise wird die unkontrollierte Reduktion vermindert, und die Reaktionsrate reduziert.

Als Komplexbildner werden erfindungsgemäß Stoffe eingesetzt, die das zweiwertige Palladium in der Lösung durch Bindung stabilisieren. Komplexbildner können bereits im eingesetzten Palladium-Salz enthalten sein. Insbesondere eignen sich Polyaminocarbonsäuren, Pyridine und andere Heteroaromaten, Beta-Diketone, Amine, Ammoniak und Carbonsäuren. Ganz besonders geeignet sind Ethylendiamintetraessigsäure (EDTA), Iminodiessigsäure, Acetylaceton (Acac) und 4-Dimethylaminopyridin (DMAP).

Desweiteren eignen sich polyfunktionelle Säuren, die mehrere Carbonsäure-und/oder Hydroxygruppen tragen, besonders geeignet sind beispielsweise Gluconsäure, Essigsäure, Milchsäure, Zitronensäure und Weinsäure.

Weiterhin eignen sich Beta-Diketone, besonders geeignet sind Diketone mit zusätzlichen Hydroxy-, Carbonsäure- oder Amingruppen.

Weitere typischerweise in stromlosen Abscheidungen eingesetzte Komplexbildner können eingesetzt werden, ohne den Schutzbereich der Erfindung zu verlassen. Dazu gehören: Ammoniumsalze, Amine, Polyamine, Chelatamine, Alkylamine, wie beispielsweise Butylamin, Ethylendiamine, hydroxymodifizierte Ethylendiamine, wie beispielsweise Quadrol.

Desweiteren können Anilin, Piperidin, Dimethylglyoxim und Nitrit als Adsorbatbildner eingesetzt werden. Auch andere dem Fachmann bekannte Komplexbildner sind möglich, ohne den Schutzbereich der Erfindung zu verlassen.

Dabei ist es günstig, wenn der Komplexbildner und das Palladium in einem molaren Verhältnis von 1,5:1 bis 50:1 vorliegen, bevorzugt in einem Verhältnis von 1,7:1 bis 10:1, besonders bevorzugt in einem Verhältnis von 2:1 bis 10:1.

Wird EDTA als Komplexbildner ausgewählt so ist es günstig, wenn EDTA und Palladium in einem molaren Verhältnis von 1,5:1 bis 5:1 vorliegen, bevorzugt 1,7:1 bis 3,5:1, ganz besonders geeignet ist 2:1.

Wird Iminodiessigsäure als Komplexbildner ausgewählt so ist es günstig, wenn Iminodiessigsäure und Palladium in einem molaren Verhältnis von 2:1 bis 10:1 vorliegen, bevorzugt 2:1 bis 6:1, ganz besonders geeignet ist das Verhältnis 4:1.

Wird Acetylaceton als Komplexbildner ausgewählt so ist es günstig, wenn Acetylaceton und Palladium in einem molaren Verhältnis von 2:1 bis 20:1 liegen, bevorzugt 7:1 bis 12:1, ganz besonders geeignet ist das Verhältnis 9:1.

Das Reduktionsmittel bildet gemeinsam mit den im Abscheidungsbad vorhandenen Metallkomplexen ein metastabiles Redoxpaar. Das Reduktionsmittel sollte entsprechend dem Wissen des Fachmanns so ausgewählt werden, dass der Reduktionsprozess idealerweise nur an geeigneten Oberflächen stattfindet. Reduktionsmittel überführen das zweiwertige Palladium, im Folgenden auch als Pd(II) bezeichnet, in den metallischen Zustand.

Als Reduktionsmittel geeignet sind reduzierende Phosphorverbindungen, reduzierende Stickstoffverbindungen, reduzierende Borverbindungen, reduzierende aminstabilisierte Borange, reduzierende organische Verbindungen, bevorzugt Hypophosphit, Hydrazin, Borhydrid, Aminoboran und/oder Formaldehyd, ganz besonders geeignet sind Hydrazin und Hypophosphit.

Hydrazin hat sich als optimal für die chemische Reduktion von Platingruppenmetallen herausgestellt. Dennoch gibt es mögliche Alternativen: Reine Platin-Filme lassen sich auch mit kohlenstoffbasierten Reduktionsmitteln wie beispielsweise Formaldehyd und Ameisensäure realisieren, ganz besonders geeignet ist Formaldehyd. Desweiteren können auch andere stickstoffbasierte Reduktionsmittel, wie beispielsweise Hydroxylamin, Tartrat, Hydrochinon oder Polygallolen verwendet werden. Weitere dem Fachmann bekannte Reduktionsmittel, die erfindungsgemäß verwendet werden können sind Alkylamine und Ethanolamine.

Das Reduktionsmittel wird gegenüber dem Palladium in einem molaren Verhältnis von 3:1 bis 500: 1 eingesetzt, bevorzugt in einem Verhältnis von 3:1 bis 100:1, besonders bevorzugt in einem Verhältnis von 3:1 bis 20:1.

Besonders geeignet ist der Einsatz von Hypophosphit als Reduktionsmittel. Hypophosphit und Palladium sollten in einem molaren Verhältnis von 3:1 bis 50:1 vorliegen, besonders geeignet ist ein Verhältnis von 7:1 bis 15:1, ganz besonders geeignet ist ein Verhältnis von 5:1.

Ganz besonders geeignet ist der Einsatz von Hydrazin als Reduktionsmittel. Hydrazin gewährleistet insbesondere auch die chemische Reinheit des Palladium-Films. Dabei ist es günstig wenn Hydrazin und Palladium in einem molaren Verhältnis von 5:1 bis 100:1 vorliegen, bevorzugt 8:1 bis 22:1, ganz besonders geeignet ist 10:1.

Als **Palladium-Quelle** werden Palladium-Salze eingesetzt, die in den wässrigen Abscheidungsbädern gelöst werden können. Insbesondere eignen sich leicht zugängliche zweiwertige Palladium-Salze wie Palladium(II)-acetat, Palladium(II)-chlorid und Palladium (II)-nitrat und Palladium (II)-nitrit.

Die Erfindung kann neben der Palladiumbeschichtung auch für andere Metallbeschichtungen angewendet werden. Dabei kann der Fachmann das Prinzip der hier angewendeten Optimierungsstrategie, nämlich die Herabsetzung der Abscheidungsreaktion durch die Einführung eines Adsorbatbildner in Kombination mit einem Komplexbildner auch auf andere Metallquellen anwenden, ohne dabei erfinderisch tätig zu werden. So ist der Fachmann auch in der Lage, die Badbedingungen entsprechend den verwendeten Metallquellen anzupassen. Als Metallquellen eignen sich Salze von Palladium, Platin, Rhodium, Ruthenium, Iridium, Osmium, Nickel, Silber, Kupfer, Gold, Zink oder Cadmium.

Da der pH-Wert eine Steuerungsgröße bei der Einstellung der Abscheidungskinetik ist, muss dieser bei den Abscheidungsbädern beachtet werden. Dazu können dem Fachmann bekannte Puffersysteme angewendet werden, wie beispielsweise Phosphate und Carbonate für den basischen bis neutralen pH-Bereich sowie Carbonsäuren und deren Salze für den sauren pH-Bereich. Bei der Verwendung von Ethylendiamintetraessigsäure (EDTA) und 4-Dimethylaminopyridin (DMAP) ist ein Puffer nicht zwingend notwendig, da diese beiden Komponenten in ihrer protonierten Form bereits den basischen pH-Bereich puffern.

Für die den Metallkomplex enthaltende Lösung wird die Palladium-Quelle PdCl₂ fein zerstoßen und unter sachtem Erwärmen in einer wässrigen Lösung des Komplexbildner (EDTA oder Acac) und des Adsorbatbildners (4-Dimethylaminopyridin ) unter Rühren aufgelöst. Zu hohe Temperaturen (längeres Erwärmen bis zum Siedepunkt des Wassers) können im Fall des EDTA bereits an dieser Stelle zur Zersetzung des Bades führen (vermutlich aufgrund der Oxidation des Komplexbildner durch das zweiwertige Palladiumsalz). Nach vollständiger Auflösung des Palladiumchlorid wird die Lösung auf Raumtemperatur abgekühlt, um bei der Vermischung mit der Reduktionslösung durch zu hohe Temperaturen bedingte homogene Nukleation zu vermeiden. Die Reduktionslösung wird einfach durch Vermischung einer gegebenen Menge Hydrazinhydrat mit Wasser hergestellt.

Mit dem erfindungsgemäßen Abscheidungsbad können auch nanopartikuläre oder nanofiligrane **Substrate** homogen beschichtet werden. Neben Substraten mit katalytisch aktiver Oberflächenchemie können insbesondere auch Substrate mit katalytisch inaktiver Oberflächenchemie beschichtet werden. Ganz besonders geeignet ist das erfindungsgemäße Abscheidungsbad zur Palladium-Beschichtung von Polymer-Nanofasern und Polymer-Nanoröhren.

Überraschenderweise kann durch **Variation des Komplexbildners** die heterogene Nukleation eingestellt werden: Während Bäder, die Acac als Komplexbildner enthalten, nur auf katalytisch aktiven Oberflächen Palladium abscheiden, ist die Palladium-Abscheidung mit Bädern, die EDTA als Komplexbildner enthalten, auch auf Substraten mit katalytisch inaktiver Oberfläche möglich. So können Oberflächen aus Glas, Eisenoxiden, Polymeren oder Kohlenstoff mit Palladium überzogen werden. In einer besonderen Ausführungsform werden katalytisch inaktive Kohlenstoff-Nanoröhren ohne katalytische Modifikation mit dem erfindungsgemäßen stromlosen PD(II)-DMAP- EDTA -Hydrazin-Abscheidungsbad gleichmäßig und mit großer Eindringtiefe beschichtet. Dabei wird gegenüber dem Stand der Technik eine deutliche Erhöhung der Eindringtiefe der Metallfilm-Beschichtung erzielt.

Wird EDTA als Komplexbildner ausgewählt so ist es günstig, wenn EDTA und Palladium in einem molaren Verhältnis von 1,5:1 bis 5:1 vorliegen, bevorzugt 1,7:1 bis 3,5:1, ganz besonders geeignet ist 2:1.

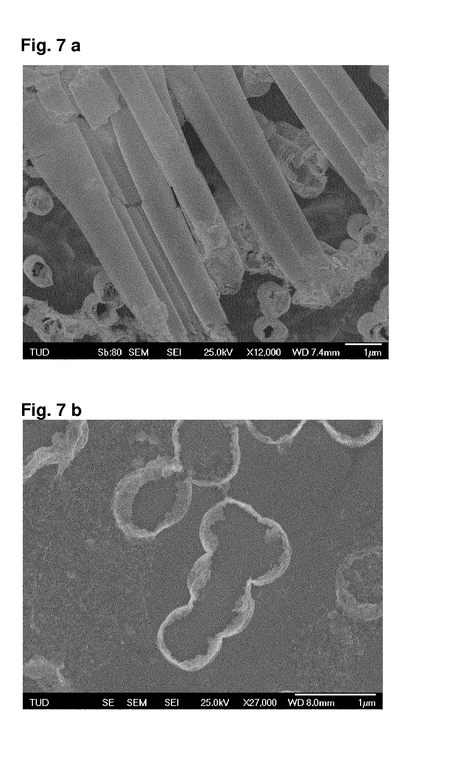

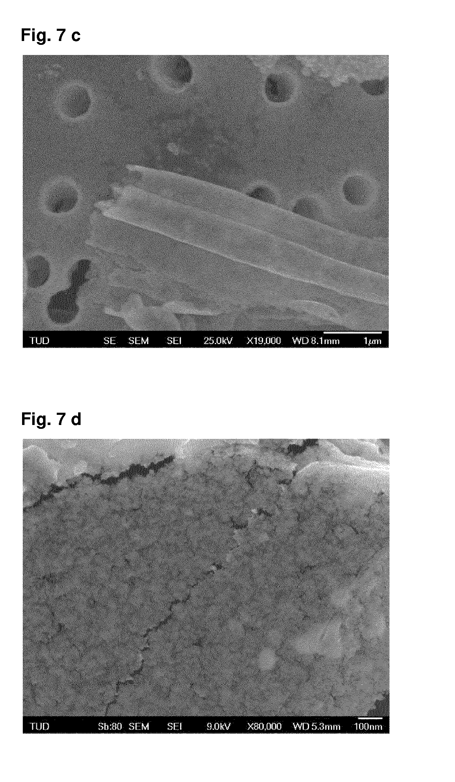

Während im Stand der Technik auf einer elektrochemisch mit Gold aktivierten porösen Kohlenstoff-Membran mittels eines PD(II)-Ascorbinsäure-Abscheidungsbad eine Eindringtiefe des Palladium-Films von deutlich weniger als 1 µm erreicht wurde (Burckel D.B., Small 5, 2009, 2792-2796), wird mit dem erfindungsgemäßen Verfahren eine Eindringtiefe von mehr als 8 µm erreicht, siehe Ausführungsbeispiel 10, Abbildung 7. Ein entscheidender Vorteil der vorliegenden Erfindung ist somit die Möglichkeit nicht aktivierte Substrate stromlos mit Palladium (Pd) zu beschichten. Daraus ergibt sich ein weiterer Vorteil, nämlich die gleichmäßige Palladiumbeschichtung von Nanofasern, Membranen und weiteren nanostrukturierten Substraten mit komplexer Oberflächengeometrie. Durch das Einsparen des Aktivierungsschritts der katalytisch inaktiven Oberfläche wird eine sowohl extrem gleichmäßige als auch dünne Palladiumbeschichtung möglich. Die Gleichmäßigkeit der Beschichtung wird durch die Einsparung des Aktivierungsschritts erreicht, während die sehr dünne Schichtdicke durch die besonders kleinen Palladium-Nanopartikel ermöglicht wird.

Die im Ausführungsbeispiel 11 dargelegte Reaktivität erweitert in Kombination mit den morphologischen Eigenschaften der erhaltenen Palladium-Filme das Anwendungsspektrum der beschriebenen Abscheidung: Sie ermöglicht die extrem gleichmäßige Bedeckung auch nicht leitfähiger und katalytisch inaktiver Substrate mit einer dünnen Schicht kleiner Palladium-NanopartikeL Diese kann als Ausgangsbasis für Folgeschritte wie z.B. die stromfreie Abscheidung anderer Metalle dienen. Die beschriebene stromfreie Methode übertrifft in ihrer Qualität dabei die ansonsten üblichen Prozesse deutlich, deren Partikelgröße im Mikrometerbreich liegt.

Die **Vorteile der Erfindung** gegenüber dem Stand der Technik liegen in der hohen Palladium-Filmhomogenität, geringer Palladium-Partiklegröße, enger Größenverteilung der Palladium-Partikel und der gleichmäßigen Bedeckung auch komplexer Oberflächen, was durch die Synthese von Palladium-Nanoröhren mit hohen Aspektverhältnissen in den Ausführungsbeispielen gezeigt werden konnte. Ein weiterer Vorteil der Erfindung liegt in der der einfachen Handhabung, da die Reaktion unter technologisch anspruchslosen Bedingungen abläuft. Die Bedingungen entsprechen einem wässrigen Medium bei basischem pH, Raumtemperatur und Verwendung üblicher Chemikalien. Ein weiterer Vorteil der Erfindung liegt in der hohe Badstabilität. Das erfindungsgemäße Verfahren und die erfindungsgemäße Badzusammensetzung ermöglicht ein freies Einstellen des heterogenen Nukleationsverhaltens, was wiederum eine selektive Palladium-Abscheidung an beliebigen Oberflächen ermöglicht. Das erfindungsgemäße Verfahren ist zur Vorbereitung von Substraten für andere Stromfreie Abscheidungsreaktionen oder Folgereaktionen geeignet, da die erfindungsgemäßen Palladium-beschichteten Substrate, z. B. Palladium-Nanostrukturen eine hohe katalytische Aktivität besitzen.

Die erfindungsgemäßen Palladium beschichteten Substrate können aufgrund der Homogenität der Palladium-Schichtdicke und aufgrund der hohen Reinheit des Palladium-Films in folgenden Gebieten verwendet werden: Elektrotechnik, Medizintechnik, Katalyse, Batterietechnik, Sensorik, Wasserstoff-Gas-Sensorik, Gastrennung, Membranreaktoren, für dekorative Zwecke, im Aufladungsschutz, für die Vorbereitung von Werkstücken und für die stromfreie oder elektrochemische Metallabscheidung.

### Abkürzungs- und Bezugszeichenliste

| | |
|---|---|
| DMAP | 4-Dimethylaminopyridin |
| EDTA | Ethylendiamintetraessigsäure |
| Acac | Acac |
| N₂H₄ | Hydrazin |
| Pd | Palladium |
| Pd(II) | zweiwertiges Palladium |
| PdCl₂ | Palladiumchlorid |

1 Polymerfolie (Templat) nach Bestrahlung mit Schwerionen
2 Polymerfolie nach Ionenspur-Ätzung
3 Polymerfolie nach Palladium-Beschichtung

### Abbildungslegenden

Fig. 1
   Schematische Darstellung zur Herstellung von Palladium-Nanoröhren: In Schritt 1 wird eine geeignete Polymerfolie mit Schwerionen bestrahlt, die diese durchschlagen. Entlang der geradlinigen Ionenspuren entstehen Schadenszonen, die selektiv heraus geätzt werden können. Dies führt zur Ausbildung zylindrischer Kanäle innerhalb des Polymerfilms (Schritt 2). Wird das Substrat nun durch stromfreie Abscheidung gleichmäßig metallisiert (Schritt 3), entstehen auf der äußeren Polymeroberfläche flache Filme, im Innern hingegen Röhren.
Fig. 2
   TEM-Aufnahmen von Nanoröhrenquerschnitten sowie aus den TEM-Aufnahmen erhaltene Partikelgrößen- Verteilungen. (a, b) Stromlose Abscheidung im Pd-DMAP-EDTA-Hydrazin-Bad (c, d) Stromlose Abscheidung im Pd-DMAP-Acac-Hydrazin-Bad.
Fig. 3
   EDX-Analyse der elementaren Zusammensetzung von Nanoröhren, die mit dem stromlosem Pd-EDTA-DMAP-Hydrazin- Abscheidungsbad hergestellt wurden
Fig. 4
   REM-Aufnahmen von Palladium-Nanostrukturen, die durch Palladium-Beschichtung von Polymertemplaten erhalten wurden. Es fand eine stromlose Abscheidung im Pd-DMAP- Acac-Hydrazin-System statt. Das Substrat wurde anschließend entfernt. (a) Zu sehen sind auf dem Oberflächenfilm verankerte Nanoröhren-Stümpfe. Die Röhren sind abgebrochen. (b) Bruchkante des Oberflächenfilms. Man beachte die außerordentliche Filmhomogenität.
Fig. 5
   Eindringtiefe des Palladium-Films in karbonisierten auf ionenspurgeätzten Polymertemplaten: REM-Aufnahme des palladierten Kohlenstoffsubstrats. Zusammensetzung des Abscheidungsbads: 7.9 mM Pd(II), 12 mM EDTA, 146 mM DMAP, 110 mM N₂H₄.
Fig. 6
   Reaktionsumsatz der Nitrophenolreduktion zur Analyse der katalytischen Aktivität der erfindungsgemäßen Palladium-Oberflächenbeschichtung
Fig. 7
   Untersuchungen zur Variation der Komponenten des Abscheidungsbads: (A) Komplexbildner: Iminodiessigsäure, (B) Adsorbatbildner: 4-Picolin, (C) Adsorbatbildner: 4-Methoxypyridin, (D) Reduktionsmittel: Natriumhypophosphit

### Ausführungsbeispiele

### Ausführungsbeispiel 1:

### Verfahren zur Herstellung des Abscheidungsbads

Es werden zunächst zwei separate Lösungen (Lösung A und Lösung B) hergestellt, die die für die Reaktion benötigten Oxidations- und Reduktionsmittel in getrennter Form enthalten. Lösung A enthält die Metallquelle, den Komplexbildner und den Adsorbatbildner. Durch die vor dem Kontakt mit dem Reduktionsmittel stattfindende Stabilisierung der Metallionen wird eine unkontrollierte Reduktion des Metalls vermieden. Lösung B enthält das verdünnte Reduktionsmittel. Die Verdünnung des Reduktionsmittels ist notwendig, um beim Mischen der beiden Lösungen lokal stark erhöhte Reduktionsmittel-Konzentrationen zu vermeiden, welche zu spontaner Metallausfällung führen könnten. Zur Anpassung des pH-Werts kann den beiden Teillösungen noch Säure oder Base zugesetzt werden. Vor Beginn der Abscheidung werden die beiden Teillösungen (Lösung A und Lösung B) in ungefähr äquivalenten Volumina, also ca. 1:1 gemischt.

### Ausführungsbeispiel 2:

### Herstellung der Abscheidungsbäder für stromlose Palladium-Beschichtungen

Für die den Metallkomplex enthaltende Lösung wird die Palladium-Quelle PdCl₂ fein zerstoßen und unter Rühren und vorsichtigem Erwärmen auf 23 bis 55°C in einer wässrigen Lösung des Komplexbildners (EDTA bzw. Acac) und des Adsorbatbildners (DMAP) aufgelöst (dieses entspricht der Lösung A aus Ausführungsbeispiel 1). Zu hohe Temperaturen (unkontrolliertes Erwärmen bis zum Siedepunkt des Wassers) können im Fall des EDTA bereits an dieser Stelle zur Zersetzung des Bades führen. Nach vollständiger Auflösung des PdCl₂ wird Lösung A auf Raumtemperatur abgekühlt, bevor Lösung B (das in Wasser verdünnte Reduktionsmittel) zugegeben wird. Das Reduktionsmittel Hydrazinhydrat wird so mit Wasser verdünnt, dass anschließend in etwa gleiche Volumina von Reduktionsmittel und Metall-Lösung (ca. 1:1) vermischt werden. Grund für das vorherige Abkühlen der Metall-Lösung und das Verdünnen der Reduktionslösung in Wasser ist die beabsichtigte Vermeidung von homogener Nukleation während des Mischvorgangs.

### Ausführungsbeispiel 3:

### Herstellung und Nutzung eines Palladium-DMAP-EDTA-Hydrazin-Bads zur Metallisierung verschiedener nichtaktivierter Substrate

Im Folgenden ist die Zusammensetzung eines erfindungsgemäßen Palladium-Abscheidungsbads mit dem Komplexbildner EDTA und dem Adsorbatbildner DMAP angegeben, das zur Palladierung nichtaktivierter Substrate geeignet ist.

| | |
|---|---|
| PdCl₂ | 10 mmol/l |
| EDTA Dintatriumsalz Dihydrat | 20 mmol/l |
| DMAP | 80 mmol/l |
| N₂H₄ | 100 mmol/l |

Das Reaktionsvolumen ist der Größe der zu metallisierenden Substrate anzupassen. Um eine homogen Metallisierung zu gewährleisten, muss die Oberfläche des Substrats für das Abscheidungsbad gleichmäßig gut zugänglich sein. Auch Reaktionsvarianten wie die Metallisierung von Kapillaren können mit dem Abscheidungsbadekönnen durchgeführt werden. Im Fall des oben beschriebenen Bads wurden Siedesteinchen, Chromatographiepapier und Polycarbonat-Folie als Testsubstrate eingesetzt. Nach einer Abscheidungszeit von 20 h bei Raumtemperatur sind alle Substrate metallisiert. Eine XRD-Analyse (Röntgendiffraktions-Analyse) bestätigt die Bildung von elementarem Palladium.

### Ausführungsbeispiel 4:

### Herstellung von ionenspurgeätzten Templaten

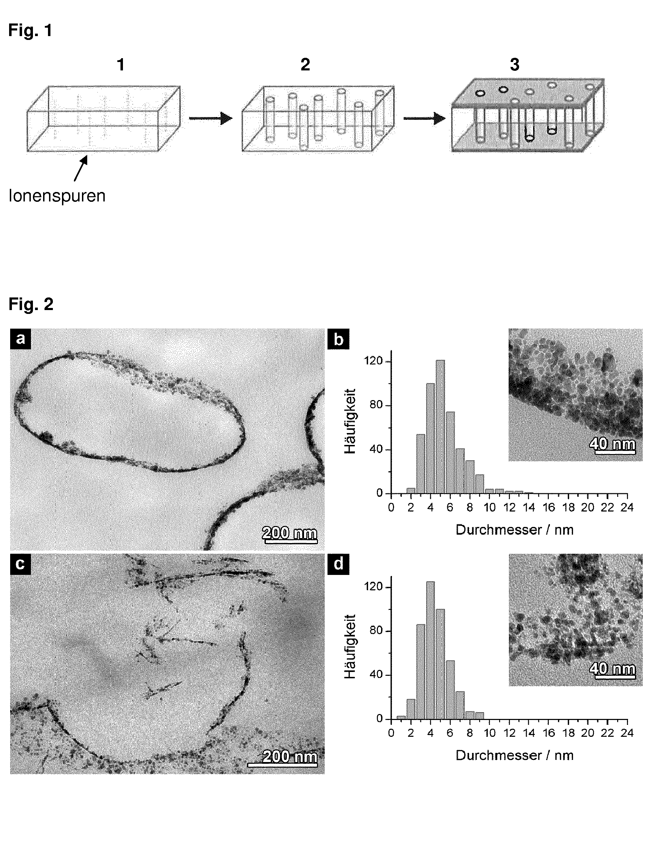

Wie in Fig. 1 schematisch gezeigt, wird in Schritt 1 eine geeignete Polymerfolie mit Schwerionen bestrahlt, die diese durchschlagen. Entlang der geradlinigen Ionenspuren entstehen Schadenszonen, die selektiv heraus geätzt werden können. Dies führt zur Ausbildung zylindrischer Kanäle innerhalb des Polymerfilms (Schritt 2). Wird das Substrat nun durch stromfreie Abscheidung gleichmäßig metallisiert (Schritt 3), entstehen auf der äußeren Polymeroberfläche flache Filme, im Innern hingegen Röhren. Es wurden zwei Templat-Typen verwendet: Ionenspurgeätztes Polycarbonat (geätzt mit Natronlauge), das als Beispiel für polymere Substrate genutzt wurde, sowie ionenspurgeätztes Polyimid (geätzt mit Hypochlorit-Lösung), das nach Pyrolyse unter Schutzgas in eine nanoporöse Kohlenstoff-Membran umgesetzt wurde und das als Beispiel für anspruchsvoll geformte Kohlenstoffsubstrate dient.

Die stromfreie Metall-Beschichtung erfolgt wie in den Ausführungsbeispielen 1, 2, 3, 5, 7 und 9-12 beschrieben.

Die porösen Template werden genutzt, um das nanotechnologische Potenzial der entwickelten stromfreien Palladium-Abscheidungen zu demonstrieren (Ausführungsbeispiele 5, 7 und 9 - 11). Die Erfindung beschränkt sich jedoch ausdrücklich nicht auf die Verwendung der im Folgenden beschriebenen Template. Vor der stromlosen Palladium-Abscheidung werden die ionenspurgeätzten Polycarbonat-Templat mit Silber-Keimen bedeckt. Dazu wird das Templat zunächst für 45 min in einer Lösung von 42 mM SnCl₂ und 71 mM Trifluoressigsäure in einer 1:1-Mischung von Methanol und Wasser gelagert (Sensibilisierung), dann zweimal mit Ethanol gewaschen und für 5 min in eine wässrige Lösung von 59 mM AgNO₃ und 230 mM NH₃ gegeben (Aktivierung). Anschließend wird die Probe zweimal mit Ethanol gewaschen und der Sensibilisierungs- und Aktivierungsschritt einmal wiederholt. Nach abschließendem Waschen mit Ethanol und Wasser wird das Substrat in das Pd-Abscheidungsbad gegeben.

### Ausführungsbeispiel 5:

### Herstellung und Nutzung eines Palladium-DMAP-EDTA-Hydrazin-Bads zur stromlosen Synthese metallischer Nanoröhren in ionenspurgeätztem Polycarbonat

Das ionenspurgeätzte Polycarbonat wird in einem Abscheidungsbad der folgenden Gesamtzusammensetzung metallisiert:
5.0 mM PdCl₂
14 mM EDTA (eingesetzt als EDTA-Dinatriumsalz-Dihydrat)
42 mM DMAP
55 mM N₂H₄

Der pH der Lösung wird auf 9.8 eingestellt. Nach 21 Stunden Abscheidungsdauer werden homogene, nanoskopische Filme erhalten, deren Beschaffenheit hinsichtlich Partikelgröße und Partikelgrößen-Verteilung und Elementarzusammensetzung im Ausführungsbeispiel 6 analysiert wird.

### Ausführungsbeispiel 6:

### Analyse der Film-Morphologie und der elementaren Zusammensetzung von Nanoröhren, die mit dem stromlosem Pd-EDTA-DMAP-Hydrazin-Abscheidungsbad hergestellt wurden

Nanoröhren wurden wie in den Ausführungsbeispielen 1, 2, 3, 5 und 7 der Reihenfolge nach beschrieben im stromlosen Abscheidungsbad Pd(II)-DMAP-EDTA-Hydrazin beschichtet. Anschließend erfolgte eine auf TEM-(Transmissionselektronen-Mikroskopie) und REM- (RasterelektronenMikroskopie) basierte Analyse, durch welche die Größe der abgeschiedenen Partikel und die Gleichmäßigkeit der Schichtdicke analysiert wurde. Die Analyse ergab eine Partikelgröße von 5.9 ± 1.9 nm. Das ist eine Verringerung der Partikelgröße gegenüber der im Stand der Technik erwähnten Referenzliteratur (Yu S., Welp U., Hua L. Z., Rydh A., Kwok W. K., Wang H. H., Chem. Mater. 17, 2005, pp. 3445-3450) um den Faktor 5, wo nur eine moderate Partikelgröße von 32 ± 10 nm erhalten wurde. Zudem zeigte die TEM-Analyse, dass die Gleichmäßigkeit der Beschichtung deutlich verbessert wurde (Fig. 2 a. b.).

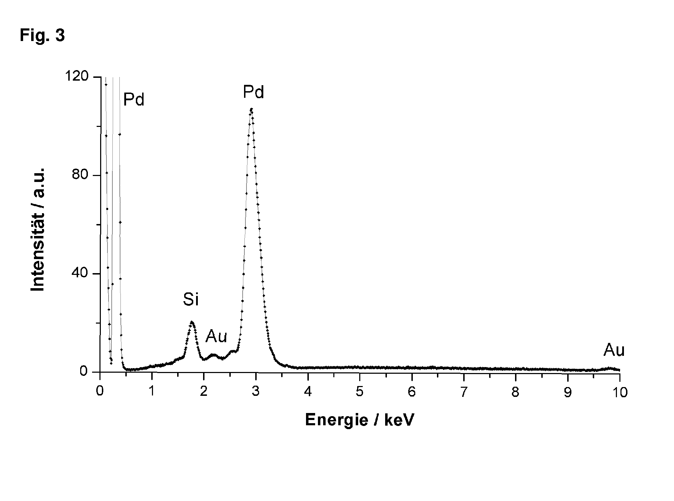

Alle in den Ausführungsbeispielen 1 bis 11 verwendeten Komponenten sind frei von Elementen wie z.B. Schwefel, Phosphor und Bor, deren Anwesenheit in stromlosen Abscheidungsbädern zur Verunreinigung der Metallfilme führen können. Zur Untersuchung der Zusammensetzung der stromlos abgeschiedenen Nanoröhren wurden im Rahmen der RasterElektronenmikroskopie EDX-Messungen (energiedispersive Röntenspektroskopie) vorgenommen. Eine repräsentative Messung ist in Fig. 3 gezeigt. Die Nanostrukturen wurden auf einem Gold-beschichteten Silicium-Wafer gesammelt. Neben den Beiträgen des Trägermaterials (Si, Au in Fig. 3) wurde lediglich Palladium gefunden (Pd in Fig. 3), was die zu erwartende Reinheit der Metallfilme, die mit den Ausführungsbeispielen 1, 2, 3, 5, 7, 9, 10 und 11 erhalten werden, bestätigt.

### Ausführungsbeispiel 7:

### Herstellung und Nutzung eines Pd-DMAP-Acac-Hydrazin-Bads zur stromlosen Synthese metallischer Nanoröhren in ionenspurgeätztem Polycarbonat

Das ionenspurgeätzte Polycarbonat wurde in einem Abscheidungsbad der folgenden Gesamtzusammensetzung metallisiert:
4.2 mM PdCl₂
38 mM Acac
47 mM DMAP
61 mM N₂H₄

Der pH der Lösung wurde auf 9.0 eingestellt. Nach 21 Stunden Abscheidungsdauer wurden homogene, nanoskopische Filme erhalten, deren Beschaffenheit hinsichtlich Partikelgröße und Partikelgrößen-Verteilung im Ausführungsbeispiel 8 analysiert worden ist.

### Ausführungsbeispiel 8:

### Analyse der Film-Morphologie von Nanoröhren, die mit dem stromlosem Pd-EDTA-DMAP-Hydrazin- Abscheidungsbad hergestellt wurden

Die wie in den Ausführungsbeispielen 1 und 2 beschriebenen Abscheidungen im System Pd(II)-DMAP-Acac-Hydrazin führten zu Palladium-Filmen, die aus im Vergleich zum Stand der Technik kleineren Partikeln bestehen. Eine TEMbasierte Analyse der Größenverteilung lieferte in Palladium-Nanoröhren eine Partikelgröße von 5.0 ± 1.4 nm. (Fig.2) Damit wurde eine Verringerung der Partikelgröße gegenüber der Referenzliteratur (Yu S., Welp U., Hua L. Z., Rydh A., Kwok W. K., Wang H. H., Chem. Mater. 17, 2005, pp. 3445-3450) um etwa den Faktor 5 erreicht.

### Ausführungsbeispiel 9:

### Analyse der Filmhomogenität mittels REM (Rasterelektronenmikroskopie)

Um die Möglichkeit zur Erzeugung dickerer Pd-Filme und daraus abgeleiteter Nanoröhren zu testen, wurde mit einem ionenspurgeätzten Polycarbonat-Templat eine längere Abscheidungsreaktion durchgeführt. Dabei wurde folgende Badzusammensetzung genutzt:
4.3 mM PdCl₂
38 mM Acac
47 mM DMAP
83 mM N₂H₄

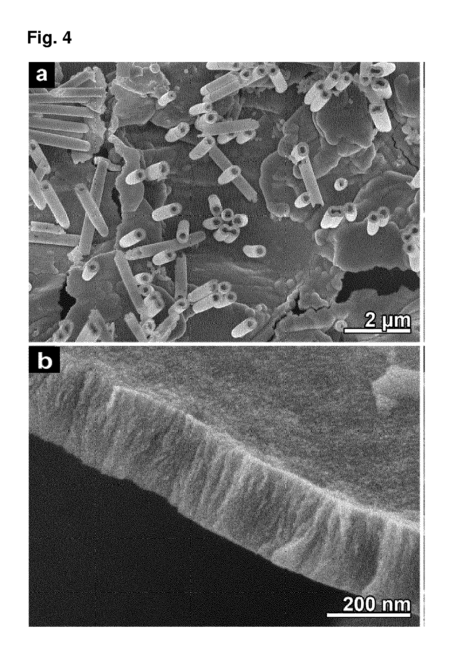

Nach einer Abscheidungsdauer von 3 Tagen wurden dickere Filme erhalten (Fig. 4 a, b). Die ausgezeichnete Filmhomogenität kann an den Bruchkanten des Oberflächenfilms gut nachvollzogen werden (Fig. 4 b). Auch die korrespondierenden Nanoröhren wiesen eine gleichmäßige Wandstärke auf.

### Ausführungsbeispiel 10:

### Analyse der Eindringtiefe der erfindungsgemäßen Palladium-Beschichtung auf nanoporösen Kohlenstoff-Templaten

Zum Test der Befähigung der stromlosen Palladium-Abscheidungsbäder, nichtaktivierte, nanostrukturierte Substrate zu metallisieren, wurden nanoporöse Kohlenstofftemplate genutzt, deren Herstellung in Ausführungsbeispiel 4 beschrieben ist. Die stromlose Palladium-Abscheidung erfolgte in einem Bad der folgenden Zusammensetzung:

| | |
|---|---|
| PdCl₂ | 7.9 mM |
| EDTA | 12 mM (eingesetzt als EDTA-Dinatriumsalz-Dihydrat) |
| DMAP | 146 mM |
| N₂H₄ | 110 mM |

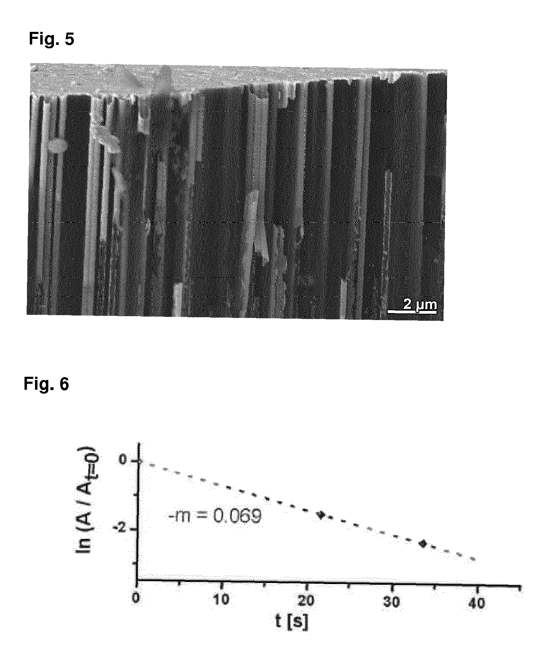

Auch ohne jegliche katalytische Modifikation des Kohlenstoffs wurden nach einer Abscheidungszeit von 4 Tagen Palladium-Nanoröhren erhalten, die tief in das Substrat eindringen. Während im Stand der Technik (Burckel D. B., Washbum C. M., Raub A. K., Brueck S. R. J., Wheeler D. R., Brozik S. M., Polsky R., Small 5, 2009, 2792-2796) nur eine Eindringtiefe von deutlich weniger als 1 µm erreicht wurde, wurde mit dem erfindungsgemäßen Abscheidungssystem eine Eindringtiefe von mehr als 8 µm erreicht. Die Analyse erfolgte mittels Rasterelektronenmikroskopie (Fig.5).

### Ausführungsbeispiel 11:

### Analyse der katalytischen Aktivität der erfindungsgemäßen Palladium-Beschichtungen

Die Reinheit der Palladium-Filme, die geringe Partikelgröße und die Abwesenheit irreversibler Schützung legt eine hohe katalytische Aktivität nahe. Um diese zu überprüfen, wurden die entsprechend den Ausführungsbeispielen 1, 2, 5, 7 und 9 hergestellten Palladium-Nanoröhren in einer Testreaktion eingesetzt, der Reduktion von 4-Nitrophenol mit Borhydrid.

Dafür wurde ein kreisrundes Stück des palladierten, porösen Polymertemplats (1 cm Durchmesser) in einen für die Zellfiltration genutzten Polymerfolienhalter eingesetzt und auf eine Glasspritze aufgeschraubt. Die Spritze enthielt die wässrige Reaktionslösung (0.84 mM 4-Nitrophenol und 60 mM NaBH₄). Im Folgenden wurden 3 mL der Reaktionslösung gleichmäßig mit einer Glasspritze durch den aufgeschraubten Filter gepresst und gesammelt. Durch Variation des Drucks wurde die Zeit variiert, in der das gegebene Lösungsvolumen durch den Filter gepresst wurde. Somit standen verschiedene Reaktionszeiten für die kinetische Untersuchung zur Verfügung.

Der Reaktionsumsatz der Nitrophenolreduktion wurde per UV/Vis-Spektroskopie ermittelt und die effektive Ratenkonstante durch lineare Regression der zeitlichen Abnahme der relativen Edukt-Absorbanz bei einer Wellenlänge von 400 nm ermittelt. Die Bestimmung der effektiven Geschwindigkeitskonstanten des Pd-Nanoröhren-Durchflussreaktors ergab einen Wert von 0.069 s⁻¹ (siehe Fig. 6). Dieser Wert ist als hoch einzuschätzen, wie der Vergleich mit anderen, in aktuellen Publikationen beschriebenen polymergeträgerten Pd-Katalysatoren zeigt:

| *Effektive Ratenkonstante:* | *Publikation:* |
|---|---|
| 0.0658 s⁻¹ | Catalysis Letters 2009, 128, 197-202. |
| 0.00887 s⁻¹ | Journal of Colloid and Interface Science 2012, 379, 89-93. |
| 0.00883 s⁻¹ | Chemical Communications 2007, 3720-3722. |

Die *Ratenkonstante* k (spezifische Rate) ist gleich der Reaktionsrate, wenn alle Reaktanden mit der Aktivität 1 vorliegen

### Ausführungsbeispiel 12:

### Untersuchungen zur Variation der Komponenten des Abscheidungsbads

Die chemische Struktur der genutzten Liganden, Adsorbatbildner und Reduktionsmittel kann verändert werden. Solange die jeweiligen Funktionen vergleichbar erfüllt werden, werden Abscheidungsbäder mit ähnlichen Eigenschaften erhalten. Zur Illustration dieses Sachverhalts wurde die stromlose Pd-Abscheidung im System PdCl₂-EDTA-DMAP-N₂H₄ (siehe Ausführungsbeispiel 3) als Ausgangspunkt für die Variation des Liganden, des Adsorbatbildners und des Reduktionsmittels genutzt.

**Variation des Komplexbildners:** Dazu wurde das in den vorherigen Ausführungsbeispielen eingesetzte EDTA gegen Iminodiessigsäure ausgetauscht (Badzusammensetzung: 10 mM PdCl₂, 40 mM Iminodiessigsäure, 40 mM NaOH, 80 mM DMAP, 100 mM N₂H₄). (Fig. 7a)

**Variation des Adsorbatbildners:** In zwei anderen Versuchen wurde der in den vorherigen Ausführungsbeispielen eingesetzte Adsorbatbildner DMAP durch die Adsorbatbildner 4-Picolin (Fig. 7b) bzw. 4-Methoxypyridin (Fig.7c) ausgetauscht. (Badzusammensetzung: 10 mM PdCl₂, 20 mM EDTA (in Form von EDTA-Dinatriumsalz-Dihydrat), 80 mM 4-Picolin bzw. 4-Methoxypyridin, 100 mM N₂H₄).

**Variation des Reduktionsmittels:** Auch eine Variation des Reduktionsmittels wurde getestet: Dazu wurde Hydrazin, welches in den vorherigen Ausführungsbeispielen als Reduktionsmittel verwendet wurde, durch ebenfalls als Reduktionsmittel wirkendes Natriumhypophosphit ausgetauscht (Badzusammensetzung: 10 mM PdCl₂, 20 mM EDTA (in Form von EDTA-Dinatriumsalz-Dihydrat), 70 mM DMAP, 50 mM NaH₂PO₂). (Fig.7d)

In allen Fällen wurden Abscheidungsbäder erhalten, mit denen Polycarbonat-Substrate unter Erhalt von nanoskopischen Dünnfilmen und metallischen Nanoröhren mit Palladium beschichtet werden konnten (siehe auch Fig. 7a-d)

## Patentansprüche

1. Zusammensetzung eines Abscheidungsbads für eine stromfreie Palladium-Beschichtung umfassend folgende Komponenten:
(1) ein wässriges Palladium-Salz
(2) mindestens ein **Reduktionsmittel,** ausgewählt aus der Gruppe umfassend reduzierende Phosphorverbindungen, reduzierende Stickstoffverbindungen, reduzierende Borverbindungen, reduzierende aminstabilisierte Borange, reduzierende organische Verbindungen, Hypophosphite, Hydrazin, Borhydrid und Formaldehyd.
(3) mindestens ein **Komplexbildner,** ausgewählt aus der Gruppe umfassend Polyaminocarbonsäuren, Heteroaromaten, Pyridine, Beta-Diketone, Amine, Ammoniak, Chelatamine, Ethylendiamin, Carbonsäuren, Nitrit, Acac,
**dadurch gekennzeichnet, dass**
(4) zusätzlich ein **Adsorbatbildner** vorhanden ist, ausgewählt aus der Gruppe umfassend Metallsalze, Übergangsmetallkomplexe, Oxoanionen, Pyridine, Heteroaromaten, Xanthogenate, adsorbierende und wasserlösliche Polymere und Beta-Diketone

2. Zusammensetzung eines Abscheidungsbads für eine stromfreie Palladium-Beschichtung gemäß Anspruch 1 **dadurch gekennzeichnet, dass** der **Adsorbatbildner** Pyridin ist.

3. Zusammensetzung eines Abscheidungsbads für eine stromfreie Palladium-Beschichtung gemäß Anspruch 1 **dadurch gekennzeichnet, dass** der **Adsorbatbildner** ausgewählt aus der Gruppe umfassend 4-Dimethylaminopyridin, Methoxypyridin und 4-Picolin ist.

4. Zusammensetzung eines Abscheidungsbads für eine stromfreie Palladium-Beschichtung gemäß Anspruch 1 **dadurch gekennzeichnet, dass** der **Komplexbildner** ausgewählt ist aus Acac und EDTA, Iminodiessigsäure und 4-Dimethylaminopyridin.

5. Zusammensetzung eines Abscheidungsbads für eine stromfreie Palladium-Beschichtung gemäß Anspruch 1 **dadurch gekennzeichnet, dass** das **Reduktionsmittel** ausgewählt ist aus Hypophosphit, Hydrazin, Borhydrid, Aminoboran und Formaldehyd.

6. Zusammensetzung eines Abscheidungsbads für eine stromfreie Palladium-Beschichtung gemäß Anspruch 1 **dadurch gekennzeichnet, dass** das **wässrige Palladium-Salz** ausgewählt ist aus Palladium(II)-acetat, Palladium(II)-chlorid und Palladium(II)-nitrat und Palladium (II)-nitrit

7. Zusammensetzung eines Abscheidungsbads für eine stromfreie Palladium-Beschichtung gemäß einem der vorherigen Ansprüche **dadurch gekennzeichnet, dass** Adsorbatbildner und Palladium in einem molaren Verhältnis von 3:1 bis 100:1 vorliegen

8. Zusammensetzung eines Abscheidungsbads für eine stromfreie Palladium-Beschichtung gemäß einem der vorherigen Ansprüche **dadurch gekennzeichnet, dass** Komplexbildners und Palladium in einem molaren Verhältnis von 3:1 bis 100:1 vorliegen.

9. Verfahren zur Herstellung eines Abscheidungsbads für die stromfreie Palladium- Beschichtung gemäß einem der vorherigen Ansprüche bei dem zunächst zwei separate Lösungen hergestellt werden, die anschließend in einem Volumenverhältnis von 1 ± 0,5 Teilen Lösung A zu 1 ± 0,5 Teilen Lösung B gemischt werden, wobei Lösung A eine wässrige Palladium-Salzlösung, mindestens einen Komplexbildner und mindestens einen Adsorbatbildner enthält und Lösung B ein in Wasser verdünntes Reduktionsmittel enthält.

10. Verfahren zur Herstellung eines Abscheidungsbads für die stromfreie Palladium- Beschichtung gemäß dem vorherigen Anspruch **dadurch gekennzeichnet, dass** das zuvor zerstoßene oder zerriebene Palladium-Salz in einer wässrigen Lösung des Komplexbildners und Adsorbatbildners unter Erwärmen auf 30 bis 80°C volständig gelöst wird.

11. Verfahren zur Herstellung eines Abscheidungsbads für die stromfreie Palladium- Beschichtung gemäß dem vorherigen Anspruch **dadurch gekennzeichnet, dass** die wässrige Palladium-Salzlösung nach vollständiger Lösung des Palladium-Salzes zunächst auf 0 bis 23 °C abgekühlt wird, bevor das Reduktionsmittel unter Rühren hinzugegeben wird.

12. **Verwendung des Abscheidungsbads** gemäß einem der vorherigen Ansprüche zur stromfreien Palladium-Beschichtung von Substraten umfassend: nanofiligranen Substrate, Substraten mit nanostrukturierter Oberflächengeometrie, Substrate mit katalytisch aktiver Oberfläche und Substrate mit katalytisch inaktiver Oberflächenchemie.

13. Verwendung des Abscheidungsbads zur stromfreien Palladium-Beschichtung von Substraten gemäß Anspruch 11, **dadurch gekennzeichnet dass**, die Substrate Siedesteinchen, oxydische Materialien, Polymeren, Biopolymeren, Cellulose, Metalle, Halbleiter-Metalle, Silicium und Glas umfassen

14. Verwendung des Abscheidungsbads zur stromfreien Palladium-Beschichtung von Substraten gemäß Anspruch 11, **dadurch gekennzeichnet dass**, die Substrate Nanofasern und Nanoröhren und Membranen umfassen.

15. **Verwendung der Palladium-beschichteten Substrate gemäß einem der vorherigen Ansprüchen** in der Elektrotechnik, Medizintechnik, Katalyse, Batterietechnik, Sensorik, Wasserstoff-Gas-Sensorik, Gastrennung, Membranreaktoren, für den Aufladungsschutz, für die Vorbereitung von Werkstücken oder für die stromfreie oder für elektrochemische Metallabscheidung
